# EUROPÄISCHE PATENTSCHRIFT

(11) **EP 1 404 740 B1**
(45) Veröffentlichungstag und Bekanntmachung des Hinweises auf die Patenterteilung: **01.12.2004**
(21) Anmeldenummer: 02760199.6
(22) Anmeldetag: 27.06.2002
(51) Int. Cl.: C08G 64/30

(54) **VERFAHREN ZUR HERSTELLUNG VON ALIPHATISCHEN OLIGOCARBONATDIOLEN**
METHOD FOR THE PRODUCTION OF ALIPHATIC OLIGOCARBONATE DIOLS
PROCEDE DE FABRICATION D'OLIGOCARBONATE DIOLS ALIPHATIQUES

(30) Priorität: 27.06.2001 DE 10130882
(43) Veröffentlichungstag der Anmeldung: 07.04.2004
(73) Patentinhaber: Bayer MaterialScience AG, 51368 Leverkusen (DE)
(72) Erfinder: TILLACK, Jörg, 51427 Bergisch Gladbach (DE); LAUE, Jörg, 41541 Dormagen (DE); WITOSSEK, Herbert, 04157 Leipzig (DE); SCHLEMENAT, Andreas, 41468 Neuss (DE)
(86) Internationale Anmeldenummer: PCT/EP2002/007106
(87) Internationale Veröffentlichungsnummer: WO 2003/002630

(56) Entgegenhaltungen:
- EP-A- 0 798 327
- DE-A- 19 829 593
- US-A- 5 171 830

## Beschreibung

Die vorliegende Erfindung betrifft ein neues Verfahren zur Herstellung von aliphatischen Oligocarbonatdiolen durch eine Umesterung von aliphatischen Diolen mit Dimethylcarbonat (DMC) bei hohen Drücken. Durch das erfindungsgemäße Verfahren ist auch eine großtechnische Herstellung von aliphatischen Oligocarbonatdiolen ausgehend von leicht zugänglichem DMC mit hohen Raum-Zeit-Ausbeuten (RZA) möglich.

Aliphatische Oligocarbonatdiole sind wichtige Vorprodukte, beispielsweise bei der Herstellung von Kunststoffen, Lacken und Klebstoffen. Sie werden z.B. mit Isocyanaten, Epoxiden, (cyclischen) Estern, Säuren oder Säureanhydriden umgesetzt. Sie können prinzipiell aus aliphatischen Diolen durch Umsetzung mit Phosgen (z.B. DE-A 1 595 446), bis-Chlorkohlensäureestern (z.B. DE-A 0 857 948), Diarylcarbonaten (z.B. DE-A 1915 908), cyclischen Carbonaten (z.B. DE-A 2 523 352: Ethylencarbonat) oder Dialkylcarbonaten (z.B. DE-A 2 555 805) hergestellt werden.

Von den Carbonatquellen besitzt das zu den Diarylcarbonaten gehörende Diphenylcarbonat (DPC) eine besondere Bedeutung, da aus DPC aliphatische Oligocarbonatdiole von besonders hoher Qualität hergestellt werden können (z.B. US-A 3 544 524, EP-A 0 292 772). DPC reagiert im Gegensatz zu allen anderen Carbonatquellen quantitativ mit aliphatischen OH-Funktionen, so dass nach dem Entfernen des entstandenen Phenols alle endständigen OH-Gruppen des Oligocarbonatdiols für die Umsetzung mit z.B. Isocyanat-Gruppen zur Verfügung stehen. Auch werden nur sehr geringe Konzentrationen an löslichem Katalysator benötigt, so dass dieser im Produkt verbleiben kann.

Die auf DPC basierenden Verfahren haben allerdings folgende Nachteile:

Von der Gesamtmenge an DPC verbleiben nur ca. 13 Gew.-% als CO-Gruppe im Oligocarbonat, der Rest wird als Phenol abdestilliert. Von den Dialkylcarbonaten verbleibt - abhängig von dem jeweiligen Alkylrest - ein wesentlich höherer Anteil im Oligocarbonat. So liefert Dimethylcarbonat (DMC) ca. 31 Gew.-% als CO zum Oligocarbonat, da das abdestillierte Methanol ein deutlich geringeres Molekulargewicht als das Phenol aufweist.

Dadurch, dass man das hochsiedende Phenol (Normalsiedepunkt: 182°C) aus der Reaktionsmischung abtrennen muss, kann man nur Diole mit einem Siedepunkt deutlich oberhalb von 182°C in der Reaktion einsetzen, um das unbeabsichtigte Abdestillieren des Diols zu vermeiden.

Dialkylcarbonate, insbesondere Dimethylcarbonat (DMC) als Ausgangskomponenten zeichnen sich sind aufgrund der einfacheren Herstellbarkeit durch eine bessere Verfügbarkeit aus. Zum Beispiel kann DMC durch Direktsynthese aus MeOH und CO gewonnen werden (z.B. EP-A 0 534 454, DE-A 19 510 909).

Zahlreiche Publikationen (z. B. US-A 2 210 817, US-A 2 787 632, EP-A 364 052) befassen sich mit der Umsetzung von Dialkylcarbonaten mit aliphatischen Diolen:

Stand der Technik ist es, aliphatische Diole zusammen mit einem Katalysator und dem Dialkylcarbonat (z.B. Diethylcarbonat, Diallylcarbonat, Dibutylcarbonat) vorzulegen und den entstehenden Alkohol (z.B. Ethanol, Butanol, Allylalkohol) aus dem Reaktionsgefäß über eine Kolonne abzudestillieren. In der Kolonne wird das höhersiedende, mitverdampfte Dialkylcarbonat von dem leichter siedenden Alkohol getrennt und wieder in die Reaktionsmischung zurückgeführt.

Die Verwendung von Dimethylcarbonat (DMC) zur Herstellung von aliphatischen Oligocarbonatdiolen ist trotz seiner guten Zugänglichkeit erst seit kurzem bekannt (z.B. US-A 5 171 830, EP-A 798 327, EP-A 798 328, DE-A 198 29 593).

In der EP-A 0 798 328 wird beschrieben die entsprechende Diol-Komponente mit DMC unter Destillation des Azeotrops unter Normaldruck umzusetzen. Die anschließende Entkappung geschieht durch Vakuumdestillation, wobei unter sehr drastischen Vakuumbedingungen (1 Torr, ca. 1,3 mbar) Nutzungsgrade der endständigen OH-Gruppen von ca. 98 % erreicht werden (EP-A 0 798 328: Tabelle 1).

In der EP-A 0 798 327 wird entsprechend ein zweistufiges Verfahren beschrieben, in dem ein Diol zuerst mit einem DMC-Überschuss unter Destillation des Azeotrops unter Normaldruck zu einem Oligocarbonat umgesetzt wird, dessen endständige OH-Gruppen komplett als Methoxycarbonyl-Endgruppen unzugänglich sind. Nach Entfernen des Katalysators und Destillation des überschüssigen DMC's im Vakuum (65 Torr, 86 mbar) wird in einem zweiten Schritt durch Zugabe weiterer Mengen des Diols und eines Lösungsmittels (z.B. Toluol) als Schlepper für entstehendes Methanol das Oligocarbonatdiol erhalten. Reste des Lösungsmittels müssen dann im Vakuum (50 Torr, 67 mbar) abdestilliert werden. Nachteilig an diesem Verfahren ist die aufwendige Durchführung durch Einsatz eines Lösungsmittels und mehrmaliges Destillieren sowie der sehr hohe DMC-Verbrauch.

In der DE-A 198 29 593 wird gelehrt, ein Diol mit DMC unter Abdestillieren des entstehenden Methanols bei Normaldruck umzusetzen. Auf die gesamte Azeotrop-Problematik wird hier - abgesehen von einer einzigen Erwähnung des Wortes "Azeotrop" in der Tabelle "Ablaufschema des erfindungsgemäßen Verfahrens" - nicht eingegangen. Aus den Beispielen kann man berechnen, dass DMC im Überschuss eingesetzt und azeotrop abdestilliert wird. Es gehen ca. 27,8 Gew.-% des eingesetzten DMC's verloren.

Gemäß der US-A 5 171 830 wird ein Diol mit DMC zunächst erhitzt und dann flüchtige Bestandteile (azeotrop) abdestilliert. Nach Vakuumdestillation unter drastischen Bedingungen (1 Torr, 1,3 mbar), Aufnahme des Produktes in Chloroform, Fällen des Produktes mit Methanol und Trocknen des Produktes wird ein Oligocarbonatdiol in 55 Gew.-% der theoretischen Ausbeute erhalten (loco. Ciba., Beispiel 6). Auf den Nutzungsgrad der endständigen OH-Gruppen und die Azeotrop-Problematik wird nicht näher eingegangen. Zwar wird in der US-A 5 171 830, Spalte 5, Zeile 24 bis 26 erwähnt, dass der Prozess im Vakuum, bei Normaldruck sowie bei erhöhten Drücken, also allgemein bei allen Drücken durchgeführt werden kann, die besonderen Vorzüge der Druckfahrweise werden aber nicht erkannt. Lediglich die Fahrweise mit reduziertem Druck zur Entfernung von flüchtigen Bestandteilen wird noch erwähnt.

In den bisher bekannten Veröffentlichungen wird also kein technisch einfach zu realisierendes Verfahren zur Umsetzung von DMC mit aliphatischen Diolen zu Oligocarbonatdiolen mit hohen Raumzeitausbeuten und mit hohen Nutzungsgraden der endständigen OH-Gruppen beschrieben.

Aufgabe der Erfindung ist daher, ein einfaches und ergiebiges, auch großtechnisch durchführbares Verfahren bereitzustellen, das es erlaubt, Oligocarbonatdiole durch Umesterung von aliphatischen Diolen mit Dimethylcarbonat, gegebenenfalls unter Einsatz einer nur so geringen Katalysatormenge, dass diese nach Abschluss der Reaktion im Produkt verbleiben kann, mit guten Raumzeitausbeuten und mit hohen Entkappungsgraden der endständigen OH-Gruppen, in einfachen Apparaturen herzustellen.

Es wurde nun gefunden, dass die Herstellung von aliphatischen Oligocarbonatdiolen durch Umsetzung von aliphatischen Diolen mit Dimethylcarbonat, gegebenenfalls beschleunigt durch Katalysatoren, bei erhöhtem Druck zu einer hohen Raum-Zeit-Ausbeute führt. Zur Vervollständigung der Reaktion und zur Entkappung (Nutzbarmachung) der endständigen OH-Gruppen werden die letzten Reste von Methanol und Spuren von Dimethylcarbonat bei reduziertem Druck, gegebenenfalls unter Einleiten von Inertgas, aus dem Produkt entfernt.

Gegenstand der Erfindung ist daher ein Verfahren zur Herstellung von aliphatischen Oligocarbonatdiolen, dadurch gekennzeichnet, dass aliphatische Diole mit Dimethylcarbonat, gegebenenfalls beschleunigt durch Katalysatoren, bei erhöhtem Druck umgesetzt werden, und zur Vervollständigung der Reaktion und zur Entkappung (Nutzbarmachung) der endständigen OH-Gruppen anschließend nichtumgesetztes Methanol und Dimethylcarbonat bei reduziertem Druck, gegebenenfalls unter Einleiten von Inertgas, entfernt werden.

Das erfindungsgemäße Verfahren wird bei erhöhtem Druck von 3 bis 100 bar und bevorzugt bei einem Druck von 3 bis 16 bar und - in Abhängigkeit vom jeweiligen Druck - bei Temperaturen von 100 bis 300°, bevorzugt bei Temperaturen von 160 bis 240°C durchgeführt.

Ein erhöhter Druck führt bei gleicher Katalysatorkonzentration zu einem besseren Umsatz von DMC und einer Verkürzung der Reaktionszeiten, was sich positiv auf die Raum-Zeit-Ausbeute auswirkt.

Die Vervollständigung der Reaktion und die Entkappung (Nutzbarmachung) der endständigen OH-Gruppen werden durch das abschließende Entfernen der letzten Reste von Methanol und Spuren von Dimethylcarbonat bei reduziertem Druck erreicht. In einer bevorzugten Ausführungsform wird die Vervollständigung der Reaktion und die Entkappung (Nutzbarmachung) der endständigen OH-Gruppen durch Einleiten eines inerten Gases (z.B. N₂) in das Oligocarbonatdiol bei einem nur leichten Vakuum von ca. 150 mbar durchgeführt. Die Gasblasen werden mit Methanol bzw. DMC gesättigt und so das Methanol nahezu vollständig aus dem Reaktionsansatz ausgetrieben. Durch das Strippen mit einem Inertgas kann durch die Entfernung des Methanols das Gleichgewicht weiter zu Gunsten des gewünschten Endproduktes verschoben, die Umesterung vervollständigt und damit die Endgruppen nutzbar gemacht werden. Die Qualität des entstandenen Oligocarbonatdiols kann auf das Niveau von DPC-basierenden Oligocarbonatdiolen angehoben werden, der Nutzungsgrad der endständigen OH-Gruppen steigt auf mehr als 98 %, bevorzugt auf 99,0 bis 99,95 %, besonders bevorzugt auf 99,5 bis 99,9 % an.

Diese Gasblasen können durch Einleiten von inerten Gasen wie Stickstoff, Edelgase, z.B. Argon, Methan, Ethan, Propan, Butan, Dimethylether, trockenem Erdgas oder trockenem Wasserstoff in den Reaktor erzeugt werden, wobei der das Oligocarbonat verlassende, Methanol- und Dimethylcarbonat-haltige Gasstrom teilweise zur Sättigung erneut dem Oligocarbonat zugeführt werden kann. Bevorzugt wird Stickstoff eingesetzt. Luft kann wegen der starken Verfärbung des Produktes bei der Herstellung von diesbezüglich anspruchslosen Endprodukten verwendet werden.

Diese Gasblasen können auch durch Einleiten von inerten leichtsiedenden Flüssigkeiten wie Pentan, Cyclopentan, Hexan, Cyclohexan, Petrolether, Diethylether oder Methyl-tert-Butylether etc. erzeugt werden, wobei die Stoffe flüssig oder gasförmig eingeleitet werden können und der das Oligocarbonat verlassende, Methanol- und Dimethylcarbonat-haltige Gasstrom teilweise zur Sättigung erneut dem Oligocarbonat zugeführt werden kann.

Die Stoffe zur Erzeugung von Gasblasen können über einfache Tauchrohre, bevorzugt mittels Ringdüsen oder Begasungsrührern in das Oligocarbonat eingebracht werden. Der erreichte Nutzungsgrad der endständigen OH-Gruppen ist abhängig von der Zeitdauer der Entkappung und von der Menge, Größe und Verteilung der Gasblasen: Mit zunehmender Zeitdauer der Entkappung und besserer Verteilung (z.B. bessere Verteilung und größere Phasengrenzfläche durch größere Anzahl an kleineren Gasblasen beim Einleiten über einen Begasungsrührer) wird der Nutzungsgrad besser. Bei Einleitung von z.B. Stickstoff (z.B. 150 mbar, 8 Kesselvolumina pro Stunde) über einen Begasungsrührer wird nach einer Stunde ein Nutzungsgrad von ca. 99 %, nach ca. 5 bis 10 Stunden von ca. 99,8 % erreicht.

Die Entkappung gegebenenfalls unterstützt durch die Einleitung von inerten Gasblasen in das Reaktionsgemisch, wird bei Temperaturen von 160°C bis 250°C, bevorzugt bei Temperaturen von 200°C bis 240°C, bei Drücken von 1 bis 1000 mbar, bevorzugt bei Drücken von 30 bis 400 mbar, besonders bevorzugt bei Drücken von 70 bis 200 mbar durchgeführt.

Bei der Herstellung der Oligocarbonatdiole wird während des Herstellprozesses DMC abdestilliert. Durch Bestimmung der DMC-Gehalte des Destillats wird die Menge an DMC bestimmt, die bei der Destillation aus dem Reaktionsansatz entfernt wurde. Diese fehlende Menge muss vor dem Strippen des Methanols mit inerten Gasen im Vakuum zur Nutzbarmachung der Endgruppen nachgefahren werden. Dabei fällt wiederum ein Gemisch aus DMC und Methanol an. Dieses verlorene DMC wird erneut nachgefahren, ein Teil wiederum abdestilliert. Mit jedem Nachfahren wird die Menge an abdestilliertem DMC weniger, man nähert sich demnach der gewünschten Stöchiometrie an.

Dieses aufwendige Vorgehen kann durch Zusammenfassen der einzelnen Nachfahrschritte deutlich vereinfacht werden: Aus vorherigen Ansätzen sind die Mengen an DMC, die in den einzelnen Nachfahrschritten abdestilliert werden, bekannt. Daher ist man später in der Lage, die komplette Menge an DMC zusammen in einem einzigen Schritt zuzufahren.

So wird die Gesamtmenge an benötigtem DMC, die Summe aus der durch die Stöchiometrie des gewünschten Produktes vorgegebenen Menge zusammen mit der Menge an DMC, die während der Reaktionsdurchführung abdestilliert wird, direkt im ersten Schritt zugefahren.

Beim Destillieren des Methanols und dem Entkappen der OH-Endgruppen zum Schluss der Reaktion beim Einleiten von inerten Gasblasen geht eine geringe Menge DMC verloren. Diese Menge muss vorher bei der Zugabe von DMC berücksichtigt werden. Diese Menge kann aus den Erfahrungswerten der vorherigen Ansätze ermittelt werden.

In einer bevorzugten Verfahrensvariante wird am Anfang der Reaktion ein so bemessener Überschuss an DMC zugegeben, dass nach dem Abdestillieren des Azeotrops und nach der Entkappung ein Produkt entsteht, das eine vollständige Funktionalität der endständigen OH-Gruppen aufweist, jedoch im Polymerisationsgrad zu hoch ist. Die Korrektur erfolgt dann durch Zugabe einer weiteren Menge der Diol-Komponente und einem erneuten, kurzen Umesterungsschritt. Die Korrekturmenge kann zum einen über die Massenbilanz - Bestimmung der DMC-Mengen in allen Destillaten und Vergleich mit der insgesamt zugefahrenen Menge - bestimmt werden oder aus einer messbaren Eigenschaft (z.B. OH-Zahl, Viskosität, durchschnittliches Molekulargewicht, etc.) des Produktes, das im Polymerisationsgrad zu hoch liegt, ermittelt werden. Eine erneute Entkappung ist nach der Korrektur nicht notwendig, da bereits vor der Korrektur alle endständigen OH-Gruppen frei vorlagen und durch Zugabe der Diol-Komponenten keine erneute Verkappung aufgebaut wird.

Eine Korrektur durch Zugabe von DMC nach dem Entkappen durch Begasen mit einem inerten Gas bei einem Produkt, das zu wenig DMC enthält, führt zu einem erneuten Aufbau der Verkappung.

Erfindungsgemäß wurden die Diole und gegebenenfalls vorhandene Katalysatoren vorgelegt, der Reaktor aufgeheizt, der Druck angelegt und anschließend das DMC zudosiert.

Das erfindungsgemäße Verfahren umfasst also folgende Verfahrensschritte:
- Vorlegen von Diol-Komponenten und gegebenenfalls Katalysator.
- Aufheizen und Druck anlegen.
- Einleiten und Reaktion des DMC's. Die DMC-Menge ist so bemessen, dass nach Abdestillieren in allen Schritten (Zufahren von DMC und Entkappung) genau die benötigte Menge DMC oder alternativ ein geringer Überschuss in der Reaktionslösung verbleibt. Die Zudosierung kann nach zwei unterschiedlichen Strategien erfolgen:
   a) Die komplette Menge an DMC wird in einem Schritt schnell zudosiert. Die Folge ist eine Optimierung der RZA. Es wird ein DMC-Methanol-Gemisch mit einem relativ hohen DMC-Gehalt (z.B. das A-zeotrop), jedoch deutlich niedriger als bei druckloser Fahrweise, abdestilliert.
   b) Das DMC wird in zwei Teilschritten zudosiert. Zunächst wird das DMC langsam zudosiert, so dass DMC-Methanol-Gemische mit geringen DMC-Gehalten abdestilliert werden. Erst wenn zu einem späteren Zeitpunkt selbst bei der langsamen Dosiergeschwindigkeit der DMC-Gehalt im Destillat deutlich ansteigt, wird das DMC schnell zudosiert, so dass ein Destillat mit einem hohen DMC-Gehalt (z.B. DMC-Methanol-Azeotrop) entsteht.
      Fahrweise b) führt zu einer besseren DMC-Ausnutzung und einer geringeren RZA.
- Entkappung: Nutzbarmachung der endständigen OH-Gruppen durch Austragung der letzten Methanol- und DMC-Reste unter reduziertem Druck, gegebenenfalls durch Erzeugen von Gasblasen (z.B. Einleiten von inerten Gasen wie N₂).
- Korrektur: Eventuell Korrektur der Stöchiometrie durch Zugabe weiterer Mengen der Diol-Komponenten und erneuter, kurzer Umesterung.

Selbstverständlich ist es auch möglich, das erfindungsgemäße Verfahren mit einem Diol-Überschuss zu fahren. Bei einer derartigen Fahrweise muss anschließend mit DMC korrigiert werden. Daraus ergibt sich dann ein erneuter Entkappungsschritt.

In einer weiteren Ausführung der Erfindung wird zu Beginn, zusammen mit den Diolen und den gegebenenfalls vorhandenen Katalysatoren, bis zu 100 %, vorzugsweise bis zu 70 %, besonders bevorzugt bis zu 50 % und ganz besonders bevorzugt bis zu 30 % des DMC's mit vorgelegt. Anschließend wird der Reaktor verschlossen, aufgeheizt und Druck angelegt. Das Destillat wird zunächst zu 100 % in den Reaktor zurückgeführt (im Kreis gefahren). Aus dem Destillatstrom kann nach Probenentnahme der DMC-Gehalt bestimmt werden. Je nach Optimierungsziel (DMC-Ausbeute oder RZA) kann man z.B. so lange mit einem Rücklaufverhältnis von 100 % fahren, bis ein minimaler DMC-Gehalt im Destillat erreicht wird, oder aber man setzt eine bestimmte Zeit fest und schaltet dann um auf destillieren (DMC/Methanolgemisch wird abdestilliert). Anschließend wird das restliche DMC zudosiert, entkappt und die eventuell notwendige Korrektur der Stöchiometrie durch Zugabe weiterer Mengen der Diol-Komponenten und erneuter, kurzer Umesterung vorgenommen.

Eingesetzt werden im erfindungsgemäßen Verfahren aliphatische Diole mit 3 bis 20 C-Atomen in der Kette, z.B.: 1,7-Heptandiol, 1,8-Octandiol, 1,6-Hexandiol, 1,5-Pentandiol, 1,4-Butandiol, 1,3-Butandiol, 1,3-Propandiol, 2-Methyl-1,3-propandiol, 3-Methyl-1,5-pentandiol, 2-Methylpentandiol, 2,2,4-Trimethyl-1,6-hexandiol, 3,3,5-Trimethyl-1,6-hexandiol, 2,3,5-Trimethyl-1,6-hexandiol, Cyclohexandimethanol, etc. sowie Mischungen verschiedener Diole.

Weiterhin werden die Additionsprodukte der Diole mit Lactonen (Esterdiole) wie z.B. Caprolacton, Valerolacton etc. eingesetzt, sowie Mischungen der Diole mit Lactonen, wobei eine einleitende Umesterung von Lacton und den Diolen nicht nötig ist.

Eingesetzt werden können ferner die Additionsprodukte der Diole mit Dicarbonsäuren wie z.B.: Adipinsäure, Glutarsäure, Bernsteinsäure, Malonsäure etc. oder Ester der Dicarbonsäuren sowie Mischungen der Diole mit Dicarbonsäuren bzw. Ester der Dicarbonsäuren, wobei eine einleitende Umesterung von Dicarbonsäure und den Diolen nicht nötig ist.

Eingesetzt werden können ferner Polyetherpolyole wie z.B. Polyethylenglycol, Polypropylenglycol, Polybutylenglycol sowie Polyetherpolyole, die durch Copolymerisation von z.B. Ethylenoxid und Propylenoxid erhalten wurden oder Polytetramethylengylcol, das durch ringöffnende Polymerisation von Tetrahydrofuran (THF) erhalten wurde.

Es können Mischungen verschiedener Diole, Lactone und Dicarbonsäuren eingesetzt werden.

Bevorzugt werden in dem erfindungsgemäßen Verfahren 1,6-Hexandiol, 1,5-Pentandiol und/oder Mischungen aus 1,6-Hexandiol und Caprolacton eingesetzt.

Vorzugsweise wurden die ε-Caprolacton-Ester in situ ohne vorherige Umsetzung aus den Rohstoffen während der Oligocarbonat-Diol-Herstellung gebildet.

Als Katalysatoren können gegebenenfalls prinzipiell alle für Umesterungsreaktionen bekannte, lösliche Katalysatoren (homogene Katalyse), sowie heterogene Umesterungskatalysatoren eingesetzt werden. Vorzugsweise wird das erfindungsgemäße Verfahren in Gegenwart eines Katalysators durchgeführt.

Insbesondere eignen sich für das erfindungsgemäße Verfahren Hydroxide, Oxide, Metallalkoholate, Carbonate und metallorganische Verbindungen der Metalle der I., II., III. und IV. Hauptgruppe des Periodensystems der Elemente, der III. und IV. Nebengruppe sowie die Elemente aus der Gruppe der Seltenen Erden, insbesondere die Verbindungen des Ti, Zr, Pb, Sn und Sb.

Zum Beispiel seien genannt: LiOH, Li₂CO₃, K₂CO₃, KOH, NaOH, KOMe, NaOMe, MeOMgOAc, CaO, BaO, KOt-Bu, TiCl₄, Titan-tetraalkoholate oder -terephthalate, Zirkonium-tetraalkoholate, Zinn-octanoate, Dibutylzinn-dilaurat, Dibutylzinn, Bistributylzinnoxid, Zinnoxalate, Bleistearate, Antimontrioxid, Zirkonium-tetra-isopropylat etc.

Weiterhin können im erfindungsgemäßen Verfahren aromatische Stickstoffheterocyclen und tertiäre Amine mit R₁R₂R₃N mit R₁₋₃ als C₁-C₃₀-Hydroxyalkyl, C₄-C₁₀aryl oder C₁-C₃₀-alkyl eingesetzt werden, besonders Trimethylamin, Triethylamin, Tributylamin, N,N-Dimethylcyclohexylamin, N,N-Dimethylethanolamin, 1,8-Diazabicyclo-(5.4.0)undec-7-en, 1,4-Diazabicyclo(2.2.2)octan, 1,2-Bis(N,N-dimethylamino)-ethan, 1,3-Bis(N,N-dimethylamino)propan und Pyridin.

Bevorzugt werden die Alkoholate und Hydroxide des Natriums und des Kaliums (NaOH, KOH, KOMe, NaOMe), die Alkoholate des Titans, Zinn oder Zirkoniums (z.B. Ti(OPr)₄), sowie Zinn-organische Verbindungen eingesetzt, wobei die Titan-, Zinn- und Zirkoniumtetraalkoholate bevorzugt bei Diolen, welche Esterfunktionen bzw. Mischungen von Diolen mit Lactonen enthalten, eingesetzt werden.

Im erfindungsgemäßen Verfahren wird der homogene Katalysator in Konzentrationen (angegeben in Gewichtsprozent Metall bezogen auf eingesetztes aliphatisches Diol) bis zu 1000 ppm (0,1 %), bevorzugt zwischen 1 ppm und 500 ppm (0,05 %), besonders bevorzugt zwischen 5 ppm und 100 ppm (0,01%) eingesetzt. Der Katalysator kann nach Abschluss der Reaktion im Produkt belassen, abgetrennt, neutralisiert oder maskiert werden. Vorzugsweise wird der Katalysator im Produkt belassen.

Das Molekulargewicht der nach dem erfindungsgemäßen Verfahren hergestellten Oligocarbonatdiole kann über das molare Verhältnis von Diol zu DMC eingestellt werden, wobei das molare Verhältnis von Diol/DMC zwischen 1,01 und 2,0 bevorzugt zwischen 1,02 und 1,8, und besonders bevorzugt zwischen 1,05 und 1,6 liegen kann. Das angegebene Verhältnis beschreibt naturgemäß die Stöchiometrie des Produktes, d. h. das effektive Verhältnis von Diol zu DMC nach Abdestillieren der DMC-Methanol-Gemische. Die DMC-Mengen, die jeweils eingesetzt werden, sind aufgrund der azeotropen Destillation des DMC's entsprechend höher. Die berechneten Molekulargewichte der nach dem erfindungsgemäßen Verfahren hergestellten Oligocarbonatdiole liegen dann z.B. im Falle von 1,6-Hexandiol als Diol-Komponente zwischen 260 und 15000 g/mol, bevorzugt zwischen 300 und 7300 g/mol, besonders bevorzugt zwischen 350 und 3000 g/mol. Wird ein vom Molekulargewicht schwereres bzw. leichteres Diol eingesetzt, so sind die Molekulargewichte der erfindungsgemäß hergestellten Oligocarbonatdiole dementsprechend höher bzw. niedriger.

Das erfindungsgemäße Verfahren ermöglicht, Oligocarbonatdiole der Formel HO-R¹-[-O-CO-O-R¹-]ₙ-OH mit Kohlenstoffzahlen von 7 bis 1300, bevorzugt von 9 bis 600, besonders bevorzugt von 11 bis 300 herzustellen, in welcher R¹ dabei als Symbol für Alkyl (aus entsprechenden aliphatischen Diolen) mit einer Kohlenstoffzahl von 3 bis 50, bevorzugt von 4 bis 40, besonders bevorzugt von 4 bis 20 steht.

Die Diole können zusätzlich Ester, Ether, Amid und/oder Nitril-Funktionen enthalten. Bevorzugt werden Diole oder Diole mit Ester-Funktionen, wie sie z.B. durch den Einsatz von Caprolacton und 1,6-Hexandiol erhalten werden, eingesetzt. Werden zwei oder mehr Diol-Komponenten eingesetzt (z. B. Mischungen aus verschiedenen Diolen oder Mischungen von Diolen mit Lactonen), so können sich zwei benachbarte Gruppen R1 in einem Molekül durchaus unterscheiden (statistische Verteilung).

Das erfindungsgemäße Verfahren erlaubt die Produktion von hochwertigen Oligocarbonatdiolen aus DMC mit guten Raumzeitausbeuten und geringem Verkappungsgrad der endständigen OH-Gruppen.

Die nach dem erfindungsgemäßen Verfahren hergestellten Oligocarbonatdiole können beispielsweise zur Herstellung von Polymeren von Kunststoffen, Fasern, Beschichtungen, Lacken und Klebstoffen, zum Beispiel durch Umsetzung mit Isocyanaten, Epoxiden, (cyclischen) Estern, Säuren oder Säureanhydriden verwendet werden. Sie können als Bindemittel, Bindemittelbestandteil und/oder Reaktivverdünner in Polyurethanbeschichtungen verwendet werden. Sie eignen sich als Baustein für feuchtigkeitshärtende Beschichtungen, als Bindemittel oder Bindemittelbestandteil in lösemittelhaltigen oder wässrigen Polyurethanbeschichtungen. Sie können weiterhin als Baustein für freie NCO-Gruppen enthaltende Polyurethanprepolymere oder in Polyurethandispersionen eingesetzt werden.

Die nach dem erfindungsgemäßen Verfahren hergestellten Oligocarbonatdiole können auch zur Herstellung thermoplastischer Kunststoffe wie aliphatische und/oder aromatische Polycarbonate, thermoplastischer Polyurethane etc. eingesetzt werden.

### Beispiele

Die erfindungsgemäßen Beispiele 1-6 zeigen exemplarisch einige Synthesen von Oligocarbonatdiolen mit einer OH-Zahl von 53-58 mg KOH/g und einem Restmethanolgehalt von <10 ppm, hergestellt mit Hilfe der Druckfahrweise. Das Vergleichsbeispiel demonstriert eine Synthese mit einer drucklose Fahrweise.

### Beispiel 1

In einem Reaktionskessel mit Kreuzbalkenrührer werden 2.316 kg 1,6-Hexandiol, 2.237 kg ε-Caprolacton und 0,54 kg Titantetraisopropylat vorgelegt. Der Druck wird mit Stickstoff auf 5,2 bar (abs.) erhöht. Anschließend wird der Ansatz in 3 h auf 205°C aufgeheizt. Mit Hilfe einer Druckregelung werden 5,2 bar konstant geregelt. Nach Erreichen der Temperatur werden 800 kg Dimethylcarbonat in 4 h über ein Tauchrohr zudosiert (ca. 200 kg/h). Gleichzeitig wird ein Destillat mit einem DMC-Gehalt von ca. 11 % in eine Vorlage abdestilliert. Die Temperatur wird danach auf 195°C abgesenkt, weitere 1200 kg Dimethylcarbonat werden in 12 h zudosiert (ca. 100 kg/h). Dabei beträgt der DMC-Anteil im Destillat nach Dosierung von 400 kg der 1200 kg ca.15 %, nach Dosierung von 800 kg ca. 24 %, am Ende der Dosierung ca. 29 %. Nach 4 h Nachreaktion wird die Temperatur auf 200°C erhöht und der Druck in 7 h von 5,2 bar auf 100 mbar reduziert. Es werden 10 Nm³ Stickstoff über ein Durchleitrohr eingeleitet. Restliches Methanol wird entfernt. Nach 4 h beträgt die OHZ 42,5 mg KOH/g und die Viskosität 25.464 mPa·s. Es erfolgt eine Nachgabe von 80 kg 1,6-Hexandiol. Nach weiteren 9 h beträgt die OHZ 50,0 mg KOH/g, die Viskosität 20.748 mPa·s. Es erfolgt eine weitere Nachgabe von 50 kg 1,6-Hexandiol. Nach weiteren 5 h erhält man eine OHZ von 57,9 mg KOH/g und eine Viskosität 14.513 mPa·s. Der Rest-Methanol-Gehalt liegt <10 ppm. Die Gesamtlaufzeit beträgt ca. 48 h.

### Beispiel 2

In einem Reaktionskessel mit Kreuzbalkenrührer werden 2.316 kg 1,6-Hexandiol, 2.237 kg ε-Caprolacton, 0,54 kg Titantetraisopropylat und 1.000 kg Dimethylcarbonat vorgelegt. Der Druck wird mit Stickstoff auf 5,2 bar (abs.) erhöht. Anschließend wird der Ansatz in 2 h auf 180°C aufgeheizt. Mit Hilfe einer Druckregelung werden 5,2 bar konstant geregelt. Es stellt sich ein geringer Rückfluss ein, der in den Kessel zurückgeführt wird. Der Dimethylcarbonat-Anteil im Rücklauf beträgt 1 h nach Erreichen von 180°C ca. 17 % und sinkt nach weiteren 5 h auf ca. 12,5 %.

Es wird auf Destillation in Vorlage umgestellt und auf 194°C aufgeheizt. Methanol mit einem DMC-Gehalt von ca. 12 % destilliert über. Nach ca. 4 h ist die Destillation beendet.

1.000 kg Dimethylcarbonat werden mit einer Geschwindigkeit von 250 kg/h über ein Tauchrohr zugegeben, ein Methanol/DMC-Azeotrop mit einem DMC-Gehalt von ca. 20-25 % wird abdestilliert. Anschließend wird in 1 h auf 200°C aufgeheizt. Nach 2 h Nachrührzeit wird in 7 h der Druck auf 200 mbar erniedrigt. Dann werden 8 Nm³ Stickstoff über ein Durchleitrohr eingeleitet und restliches Methanol entfernt. Nach 6 h beträgt die OHZ 43,2 mg KOH/g und die Viskosität 23.371 mPa·s, es erfolgt eine Nachgabe von 74 kg 1,6-Hexandiol. Nach weiteren 6 h erhält man eine OHZ von 48,8 mg KOH/g und eine Viskosität von 20.001 mPa·s. Der Rest-Methanol-Gehalt ist 20 ppm. Es erfolgt eine weitere Nachgabe von 55 kg 1,6-Hexandiol. Nach weiteren 6 h Reaktionszeit beträgt die OHZ 56,5 mg KOH/g und die Viskosität 15.500 mPa·s. Der Rest-Methanol-Gehalt liegt < 10 ppm. Die Gesamtlaufzeit beträgt ca. 45 h.

### Beispiel 3

Ein 200 1-Rührkessel mit Blattrührer wurde mit einer 2,5 m langen Füllkörperkolonne (⌀ 11 cm, gefüllt mit Pallkörpern), aufgesetztem Kühler und einer 1001 Vorlage ausgerüstet. In der Vorlage aufgefangene Destillate können über eine Pumpe Unterspiegel über einen Bodenflansch wieder in den Reaktor geleitet werden.

Im Reaktor wurden 62,353 kg Adipol, 60,226 kg ε-Caprolacton, 12 g Titantetraisopropylat und 23,5 kg DMC vorgelegt. Nach Inertisierung durch zweimaliges Evakuieren auf 300 mbar und anschließendes Befüllen mit Stickstoff wird innerhalb von 1 h auf 80°C aufgeheizt und homogenisiert. Durch Aufpressen von Stickstoff wird ein Druck von 5,2 bar eingestellt und mit Hilfe einer Druckregelung konstant geregelt. Anschließend wird innerhalb von 2 h auf 194°C aufgeheizt und 2 h konstant gehalten.

Weitere 33,49 kg DMC werden innerhalb von 2 h bei 194°C in den Rührkessel dosiert. Nach der Zugabe des DMC's wird innerhalb von 30 Minuten auf 196°C aufgeheizt und diese Temperatur 5 h lang gehalten. Anschließend wird in 30 Minuten auf 200°C aufgeheizt und 2 h das gesamte DMC/Methanolgemisch (31 kg mit einem DMC-Gehalt von 25,7 %) abdestilliert. Innerhalb von 1 h wird dann der Druck auf 100 mbar reduziert und Stickstoff durchgeleitet. Nach 7 h Vakuumdestillation bei 100 mbar und 200°C unter Stickstoffdurchleitung erreicht man eine OHZ von 60,3 mg KOH/g und eine Viskosität von 8.667 mPa·s (23°C), 2 h später eine OHZ von 55,8 und eine Viskosität von 13.099 mPa·s und nach weiteren 7 h eine OHZ von 53,7 und eine Viskosität von 15.794 mPa·s.

Damit beträgt die Laufzeit 40 h und der DMC-Gehalt im Destillat 25,7 %.

### Beispiel 4

In einem 20 1 Druckautoklav mit Kreuzbalkenrührer, Kolonne und nachgeschaltetem Kühler sowie Vorlage werden 9,267 kg 1,6-Hexandiol und 0,13 g Tetraisopropyltitanat vorgelegt. Nach Inertisierung durch 2-maliges Evakuieren und anschließendes Befüllen mit N₂ wird der Druck im Reaktor und der Peripherie (Kolonne, Kühler, Vorlage) auf 5,2 bar mit N₂ eingestellt. Anschließend wird auf 197°C aufgeheizt und über 6 h 9,63 kg DMC in den Reaktor dosiert. Nach der Dosierphase wird auf 200°C aufgeheizt und 2 h bei dieser Temperatur destilliert. Man erhält 6,17 kg Destillat mit einem DMC-Gehalt von 25,1 %. Der Druck wird auf 100 mbar reduziert und Stickstoff durchgeleitet. Nach 9 h erreicht man eine OHZ von 159 mg KOH/g. Der Druck wird wieder auf 5,2 bar eingestellt und 1 kg DMC innerhalb von 1 h zudosiert. Nach der Dosierung wird zunächst 2 h gerührt, dann der Druck erneut auf 100 mbar reduziert und unter Stickstoffdurchleitung destilliert. Nach weiteren 18 h Vakuumdestillation bei 100 mbar und 200°C liegt die OHZ bei 65,5 mg KOH/g. Der Druck wird auf 5,2 bar erhöht, 96 g DMC zudosiert, 2 h gerührt, entspannt, auf 100 mbar evakuiert und unter Stickstoffdurchleitung destilliert. Nach 19 h erhält man schließlich ein Produkt mit einer OHZ von 56,0 mg KOH/g und eine Viskosität von 1.699 mPa·s (75°C).

### Beispiel 5

Reaktor: 20 1 Hagemann-Reaktor mit Kreuzbalkenrührer, Kolonne und nachgeschaltetem Kühler sowie Vorlage. Die Dosierung des Dimethylcarbonats erfolgt über eine Membranpumpe direkt in den Reaktor (nicht getaucht).

Im Reaktor werden 6,68 kg 1,6-Hexandiol (0,057 kmol), 6,45 kg ε-Caprolacton (0,057 kmol) und 1 g Tetraisopropyltitanat vorgelegt. Nach Inertisierung durch zweimaliges Evakuieren auf 300 mbar und anschließendes Befüllen mit Stickstoff wird in 1 h zunächst auf 80°C und dann in 1 h auf 194°C aufgeheizt. Bei 194°C werden 6,14 kg Dimethylcarbonat (0,068 kmol) in etwa 5 h zudosiert. Nach Beendigung der Dosierung wird der Ansatz 4 h bei 196°C gehalten und dann die Temperatur auf 200°C erhöht. Der Reaktor wird nach 2h bei 200°C auf Normaldruck entspannt und das übergegangene Destillat (2,9 kg) aus der Vorlage entnommen. Nach der Entnahme des Destillats wird der Druck auf 100 mbar reduziert und Stickstoff durchgeleitet. Nach 6 h erhält man eine Viskosität von 42.135 mPa·s und eine OHZ von 29,8 mg KOH/g. Um die gewünschte OH-Zahl von 53-58 mg KOH/g zu erreichen werden 0,413 kg 1,6-Hexandiol nachgegeben und weitere 6 h bei 200°C und einem Druck von 100 mbar unter Stickstoffdurchleitung gerührt. Man erhält eine OH-Zahl von 45,8 mg KOH/g und eine Viskosität 21.725 mPa·s. Es werden weitere 0,150 kg Adipol nachgegeben. Nach weiteren 8h erhält man eine Viskosität von 18.330 mPa·s und eine OH-Zahl von 56,8 mg KOH/g.
Die Gesamtreaktionszeit beträgt ca. 36 h.

### Beispiel 6

9270 kg 1,6-Hexandiol und 8950 kg ε-Caprolacton werden bei 100°C im mit Kreuzbalkenrührer gerührten Reaktor mit Kolonne und Totalkondensator vorgelegt. 1,5 kg Titantetraisopropylat werden zugegeben. Anschließend wird der Kesseldruck mittels Einleiten von Stickstoff auf 5,2 bar absolut erhöht, und danach wird auf 200°C aufgeheizt. Innerhalb von 15 h werden nun 7300 kg Dimethylcarbonat gleichmäßig zudosiert. Gleichzeitig wird entstehendes Methanol mit einem Dimethylcarbonat-Anteil von 15-19 Gew.-% abdestilliert. Anschließend wird die Temperatur auf 180°C erniedrigt und in 3 h auf Normaldruck entspannt. Danach wird das Vakuum in 12 h auf 60 mbar absolut abgesenkt. Nunmehr werden 2 Nm³/h Stickstoff über ein Durchleitrohr in die Reaktionsmischung eingeleitet, um restliches Methanol zu entfernen, und das Vakuum wird auf 20 mbar abgesenkt. Der Ansatz wurde während weiterer 24 h bei 180°C gerührt, um unerwünschte Nicht-OH-Endgruppen (insbesondere Methylcarbonatgruppen) unter einen Wert von insgesamt 5 Mol-% zu senken. OH-Zahl und Viskosität werden ermittelt, gegebenenfalls wird korrigiert. Anschließend wird der Reaktor belüftet, auf 100 °C abgekühlt und filtriert. Man erhält 20 000 kg eines klaren, farblosen, bei Raumtemperatur nicht kristallisierenden Harzes mit einer OH-Zahl von 56 und einer Viskosität von 15000 mPa.s bei 23°C.

### Vergleichsbeispiel

### Herstellung des Produkts aus Beispiel 5 mit einer drucklosen Fahrweise

- Reaktor:: 20 1 Hagemann-Reaktor mit Kreuzbalkenrührer, Kolonne und nachgeschaltetem Kühler sowie Vorlage. Die Dosierung Dimethylcarbonates erfolgte über eine Membranpumpe direkt in den Reaktor (nicht getaucht).

Im Reaktor werden 6,68 kg 1,6-Hexandiol (0,057 kmol), 6,45 kg ε-Caprolacton (0,057 kmol) und 21 g Tetraisopropyltitanat vorgelegt. Nach Inertisierung durch zweimaliges Evakuieren auf 300 mbar und anschließendes Befüllen mit N2 wird in 1 h zunächst auf 80°C, dann in einer weiteren Stunde auf 140°C aufgeheizt. Bei 140°C werden 6,14 kg Dimethylcarbonat (0,068 kmol) so zudosiert, dass die Kolonnenkopftemperatur nicht über 67°C steigt. Die Dosierzeit beträgt etwa 24 h bei einer Sumpftemperatur von 140 bis 182°C. Nach Beendigung der Dosierung erhöht man die Temperatur in ca. 1h auf 200°C. 4 h nach Erreichen von 200°C wird eine OH-Zahl von 85,7 mg KOH/g bestimmt. Der Ansatz wird auf 140°C abgekühlt und bei einer Begrenzung der Kolonnenkopftemperatur auf 65°C mit 0,357 kg reinem Dimethylcarbonat korrigiert. Die Dosierzeit beträgt etwa 3,5 h. Anschließend wird in 2 h wieder auf 200°C aufgeheizt. Danach wird 3 h bei 200°C unter Normaldruck und 5 h bei 100 mbar gerührt. Danach erhält man eine OH-Zahl von 31,3 mg KOH/g und eine Viskosität von 33.320 mPa·s. Um die gewünschte OH-Zahl zu erreichen werden 0,395 kg Adipol nachgegeben.

Nachdem nochmals ca. 3 h bei 200°C und bei Normaldruck und 7h bei 100mbar umgesetzt wurde, beträgt die OH-Zahl 52,5 mg KOH/g und die Viskosität 15.737 mPa·s.

Die Gesamtreaktionszeit beträgt ca. 56 h.

Im Vergleich zu Beispiel 5 war eine längere Reaktionszeit sowie ein höherer Katalysatorbedarf und ein größerer DMC-Verlust festzustellen.

## Patentansprüche

1. Verfahren zur Herstellung von aliphatischen Oligocarbonatdiolen, **dadurch gekennzeichnet, dass** zunächst aliphatische Diole mit Dimethylcarbonat, gegebenenfalls in Anwesenheit von Katalysatoren, bei erhöhtem Druck von 3 - 100 bar umgesetzt werden, und anschließend zur Vervollständigung der Reaktion und zur Entkappung (Nutzbarmachung) der endständigen OH-Gruppen nichtumgesetztes Methanol und Dimethylcarbonat bei reduziertem Druck, gegebenenfalls unter Einleiten von Inertgas, entfernt werden.

2. Verfahren nach Anspruch 1, **dadurch gekennzeichnet, dass** zunächst Diole und gegebenenfalls vorhandene Katalysatoren vorgelegt werden, der Reaktor aufgeheizt und der Druck angelegt wird und anschließend das DMC zudosiert wird.

3. Verfahren nach Anspruch 2, **dadurch gekennzeichnet, dass** zunächst das DMC langsam in den Reaktor dosiert wird, und erst zu einem späteren Zeitpunkt die Dosiergeschwindigkeit soweit erhöht wird, dass das entsprechende DMC/Methanol-Azeotrop abdestilliert wird.

4. Verfahren nach Anspruch 1, **dadurch gekennzeichnet, dass** das DMC in einem Schritt schnell zudosiert wird.

5. Verfahren nach Anspruch 1, **dadurch gekennzeichnet, dass** mit den Diolen und gegebenenfalls vorhandene Katalysatoren bis zu 100 % der benötigten DMC-Menge zugegeben, der Reaktor aufgeheizt, der Druck angelegt, das Destillat so lange zu 100 % in den Reaktor zurückgeführt wird, bis ein bestimmter bzw. konstanter DMC-Gehalt im Destillat erhalten wird, anschließend das DMC/Methanolgemisch abdestilliert und das restliche DMC zudosiert wird.

6. Verfahren nach Anspruch 1, **dadurch gekennzeichnet, dass** die Umsetzung von DMC mit aliphatischen Diolen bei Temperaturen von 100 bis 300° durchgeführt wird.

7. Verfahren nach Anspruch 1, **dadurch gekennzeichnet, dass** zur Vervollständigung der Reaktion und zur Entkappung (Nutzbarmachung) der endständigen OH-Gruppen die letzten Reste von Methanol und Spuren von Dimethylcarbonat bei reduziertem Druck, gegebenenfalls unter Einleiten von Inertgas, aus dem Produkt entfernt werden.

8. Verfahren nach Anspruch 7, **dadurch gekennzeichnet, dass** die Entkappung bei Temperaturen von 160°C bis 250°C und bei Drücken von 1 bis 1000 mbar durchgeführt wird.

9. Verfahren nach Anspruch 7, **dadurch gekennzeichnet, dass** die Entkappung der OH-Endgruppen nach Abschluss der Reaktion (Destillation) durch Austragung der letzten Reste von Methanol und Vervollständigung der Umesterung durch Einleiten von inerten Gasblasen in das Reaktionsgemisch durchgeführt wird.

10. Verfahren nach Anspruch 7, **dadurch gekennzeichnet, dass** die Entkappung der endständigen OH-Gruppen nach Abschluss der Reaktion (Destillation) durch Einleiten von inerten Gasen wie Stickstoff, Edelgasen, Methan, Ethan, Propan, Butan, Dimethylethern, trockenem Erdgas oder trockenem Wasserstoff in den Reaktor und Erzeugung von Gasblasen im Reaktor geschieht.

11. Verfahren nach Anspruch 7, **dadurch gekennzeichnet, dass** die Nutzbarmachung der endständigen OH-Gruppen nach Abschluss der Reaktion (Destillation) durch Einleiten von leichtsiedenden, inerten Flüssigkeiten wie Pentan, Cyclopentan, Hexan, Cyclohexan, Petrolether, Diethylether oder Methyl-tert-Butylether in den Reaktor und Erzeugung von Gasblasen im Reaktor geschieht, wobei die Stoffe flüssig oder gasförmig eingeleitet werden können.

12. Verfahren nach Anspruch 1, **dadurch gekennzeichnet, dass** der das Oligocarbonat verlassende, Methanol- und Dimethylcarbonat-haltige Gasstrom teilweise zur Sättigung erneut dem Oligocarbonat zugeführt wird.

13. Verfahren nach Anspruch 1, **dadurch gekennzeichnet, dass** die Gesamtmenge an benötigtem DMC, die Summe aus der durch die Stöchiometrie des gewünschten Produktes vorgegeben Menge zusammen mit der Menge an DMC, die während der Reaktionsdurchfühnmg abdestilliert wird, direkt mit berücksichtigt wird.

14. Verfahren nach Anspruch 1, **dadurch gekennzeichnet, dass** am Anfang der Reaktion ein so bemessener Überschuss an DMC eingesetzt wird und nach dem Abdestillieren des Azeotrops und nach der Entkappung ein Produkt entsteht, das eine vollständige Funktionalität der OH-Gruppen aufweist, jedoch im Polymerisationsgrad zu hoch ist und anschließend durch Zugabe der entsprechenden Mengen der Diol-Komponenten und erneuter Umesterung die bestimmte Stöchiometrie des Oligocarbonatdiols eingestellt wird.

15. Verfahren nach Anspruch 1, **dadurch gekennzeichnet, dass** aliphatische Diole mit 3 bis 20 C-Atomen in der Kette, sowie Mischungen verschiedener Diole eingesetzt werden.

16. Verfahren nach Anspruch 1, **dadurch gekennzeichnet, dass** Additionsprodukte der Diole mit Lactonen (Esterdiole) wie z. B. Caprolacton, Valerolacton etc., sowie Mischungen der Diole mit Lactonen eingesetzt werden.

17. Verfahren nach Anspruch 1, **dadurch gekennzeichnet, dass** Kondensationsprodukte der Diole mit Dicarbonsäuren wie z.B.: Adipinsäure, Glutarsäure, Bemsteinsäure, Malonsäure etc. oder Ester der Dicarbonsäuren sowie Mischungen der Diole mit Dicarbonsäuren bzw. Ester der Dicarbonsäuren eingesetzt werden.

18. Verfahren nach Anspruch 1, **dadurch gekennzeichnet, dass** Polyetherpolyole wie z.B. Polyethylenglycol, Polypropylenglycol, Polybutylenglycol eingesetzt werden.

19. Verfahren nach Anspruch 1, **dadurch gekennzeichnet, dass** Hexandiol-1,6, Pentandiol-1,5 und/oder Mischungen von Hexandiol-1,6 und Caprolacton eingesetzt werden.

20. Verfahren nach Anspruch 16, 17 und 19, **dadurch gekennzeichnet, dass** die Ester in situ ohne einleitende Umesterung aus den Rohstoffen während der Oligocarbonat-Diol-Herstellung gebildet werden.

21. Verfahren nach Anspruch 1, **dadurch gekennzeichnet, dass** das durch die Stöchiometrie des herzustellenden Endproduktes vorgegebene molare Verhältnis von Diol zu DMC im Produkt zwischen 1,01 und 2,0 liegt.

22. Verfahren nach Anspruch 1, **dadurch gekennzeichnet, dass** die für die Umesterungsreaktionen lösliche Katalysatoren (homogene Katalyse) eingesetzt werden.

23. Verfahren nach Anspruch 22, **dadurch gekennzeichnet, dass** lösliche Katalysatoren in Konzentrationen bis 1000 ppm (0,1 Gew.-%) eingesetzt werden.

24. Verfahren nach Anspruch 1, **dadurch gekennzeichnet, dass** heterogene Umestenmgskatalysatoren eingesetzt werden (heterogene Katalyse).

## Claims

1. Process for preparing aliphatic oligocarbonate diols, **characterized in that** aliphatic diols are firstly reacted with dimethyl carbonate, optionally in the presence of catalysts, at a superatmospheric pressure of 3-100 bar and unreacted methanol and dimethyl carbonate are subsequently removed under reduced pressure, optionally with introduction of inert gas, to complete the reaction and to set free (make usable) the terminal OH groups.

2. Process according to Claim 1, **characterized in that** diols and optionally catalysts are firstly placed in a reactor, the reactor is heated and the pressure is applied and the DMC is subsequently added.

3. Process according to Claim 2, **characterized in that** the DMC is firstly fed slowly into the reactor and the rate of introduction is only later increased so that the respective DMC/methanol azeotrope is distilled off.

4. Process according to Claim 1, **characterized in that** the DMC is fed in quickly in one step.

5. Process according to Claim 1, **characterized in that** up to 100% of the required amount of DMC is added with the diols and any catalysts, the reactor is heated, the pressure is applied, 100% of the distillate is recirculated to the reactor until a particular or constant DMC content in the distillate is obtained, the DMC/methanol mixture is subsequently distilled off and the remaining DMC is fed in.

6. Process according to Claim 1, **characterized in that** the reaction of DMC with aliphatic diols is carried out at temperatures of from 100 to 300°.

7. Process according to Claim 1, **characterized in that** the last residues of methanol and traces of dimethyl carbonate are removed from the product under reduced pressure, optionally with introduction of inert gas, to complete the reaction and to set free (make usable) the terminal OH groups.

8. Process according to Claim 7, **characterized in that** the setting-free is carried out at temperatures of from 160°C to 250°C and at pressures of from 1 to 1000 mbar.

9. Process according to Claim 7, **characterized in that** the setting-free of the OH end groups after conclusion of the reaction (distillation) is carried out by removal of the last residues of methanol and completion of the transesterification by introducing inert gas bubbles into the reaction mixture.

10. Process according to Claim 7, **characterized in that** the setting-free of the terminal OH groups after conclusion of the reaction (distillation) is effected by introducing inert gases such as nitrogen, noble gases, methane, ethane, propane, butane, dimethyl ethers, dry natural gas or dry hydrogen into the reactor and generating gas bubbles in the reactor.

11. Process according to Claim 7, **characterized in that** the terminal OH groups are made usable after conclusion of the reaction (distillation) by introducing low-boiling, inert liquids such as pentane, cyclopentane, hexane, cyclohexane, petroleum ether, diethyl ether or methyl tert-butyl ether into the reactor and generating gas bubbles in the reactor, with the materials being able to be introduced in liquid or gaseous form.

12. Process according to Claim 1, **characterized in that** the gas stream containing methanol and dimethyl carbonate leaving the oligocarbonate is partly fed back into the oligocarbonate to saturate it.

13. Process according to Claim 1, **characterized in that** the total amount of DMC required, viz, the sum of the amount determined by the stoichiometry of the desired product together with the amount of DMC which is distilled off during the reaction procedure, is directly taken into account.

14. Process according to Claim 1, **characterized in that** DMC is added at the beginning of the reaction in such an excess that the product formed after distilling off the azeotrope and setting the OH groups free has complete functionality of the OH groups but has a degree of polymerization which is too high and the particular stoichiometry of the oligocarbonate diol is subsequently set by addition of the appropriate amounts of the diol component and renewed transesterification.

15. Process according to Claim 1, **characterized in that** aliphatic diols having from 3 to 20 carbon atoms in the chain or mixtures of various diols are used.

16. Process according to Claim 1, **characterized in that** addition products of the diols with lactones (ester diols), e.g. caprolactone, valerolactone, etc., or mixtures of the diols with lactones are used.

17. Process according to Claim 1, **characterized in that** condensation products of the diols with dicarboxylic acids, e.g. adipic acid, glutaric acid, succinic acid, malonic acid, etc., or esters of the dicarboxylic acids or mixtures of the diols with dicarboxylic acids or esters of dicarboxylic acids are used.

18. Process according to Claim 1, **characterized in that** polyether polyols such as polyethylene glycol, polypropylene glycol, polybutylene glycol are used.

19. Process according to Claim 1, **characterized in that** 1,6-hexanediol, 1,5-pentanediol and/or mixtures of 1,6-hexanediol and caprolactone are used.

20. Process according to Claim 16, 17 or 19, **characterized in that** the esters are formed in-situ from the raw materials during the preparation of the oligocarbonate diol without introductory transesterification.

21. Process according to Claim 1, **characterized in that** the molar ratio of diol to DMC in the product determined by the stoichiometry of the end product to be prepared is in the range from 1.01 to 2.0.

22. Process according to Claim 1, **characterized in that** soluble catalysts (homogeneous catalysis) are used for the transesterification reactions.

23. Process according to Claim 22, **characterized in that** soluble catalysts are used in concentrations of up to 1000 ppm (0.1% by weight).

24. Process according to Claim 1, **characterized in that** heterogeneous transesterification catalysts are used (heterogeneous catalysis).

## Revendications

1. Procédé de préparation d'oligocarbonates diols aliphatiques, **caractérisé en ce que** d'abord on fait réagir les diols aliphatiques avec du carbonate de diméthyle, éventuellement en présence de catalyseurs, à une pression élevée de 3 - 100 bar, et ensuite pour la réalisation complète de la réaction et pour le coiffage (utilisation) des groupes OH terminaux on élimine sous pression réduite le méthanol et le carbonate de diméthyle n'ayant pas réagi, éventuellement avec introduction de gaz inerte.

2. Procédé selon la revendication 1, **caractérisé en ce que** d'abord on introduit des diols et éventuellement les catalyseurs présents, on chauffe le réacteur et on applique la pression et ensuite on introduit en dosant le CDM.

3. Procédé selon la revendication 2, **caractérisé en ce que** d'abord on dose lentement le CDM dans le réacteur, et seulement à un point de temps plus tard on augmente la vitesse de dosage à un point tel que l'azéotrope correspondant CDM/méthanol est éliminé par distillation.

4. Procédé selon la revendication 1, **caractérisé en ce que** on introduit en dosant rapidement le CDM en une étape.

5. Procédé selon la revendication 1, **caractérisé en ce qu'**on ajoute avec les diols et éventuellement avec les catalyseurs présents jusqu'à 100 % des quantités nécessaires de CDM, on chauffe le réacteur, on applique la pression, on renvoie le distillat jusqu'à 100 % dans le réacteur, jusqu'à ce qu'on obtienne une quantité de CDM définie ou constante dans le distillat, ensuite on élimine par distillation le mélange GDM/méthanol et on introduit en dosant le CDM restant.

6. Procédé selon la revendication 1, **caractérisé en ce qu'**on effectue la réaction du CDM avec des diols aliphatiques à des températures de 100 à 300 °C.

7. Procédé selon la revendication 1, **caractérisé en ce que** pour la réalisation complète de la réaction et pour le coiffage (utilisation) des groupes OH terminaux, on élimine du produit les derniers restes de méthanol et les traces de carbonate de diméthyle sous pression réduite, éventuellement avec introduction de gaz inerte.

8. Procédé selon la revendication 7, **caractérisé en ce qu'**on effectue le coiffage à des températures de 160 °C à 250 °C et sous pression de 1 à 1000 mbar.

9. Procédé selon la revendication 7, **caractérisé en ce qu'**on effectue le coiffage des groupes OH terminaux après la fin de la réaction (distillation) par entraînement des derniers restes de méthanol et la réalisation complète de la transestérification par introduction de bulles de gaz inerte dans le mélange réactionnel.

10. Procédé selon la revendication 7, **caractérisé en ce que** le coiffage des groupes OH terminaux a lieu après la fin de la réaction (distillation) par introduction de gaz inertes comme l'azote, les gaz rares, le méthane, l'éthane, le propane, le butane, les éthers de diméthyle, les gaz naturels séchés ou l'hydrogène séché dans le réacteur et formation de bulles de gaz inerte dans le réacteur.

11. Procédé selon la revendication 7, caractérisé en ce l'utilisation des groupes OH terminaux a lieu après la fin de la réaction (distillation) par introduction de liquides inertes à bas point d'ébullition comme le pentane, le cyclopentane, l'hexane, le cyclohexane, l'éther de pétrole, l'éther diéthylique ou l'éther de méthyl-tert-butyle dans le réacteur et formation de bulles de gaz inerte dans le réacteur, les composés pouvant être introduits sous forme liquide ou gazeuse.

12. Procédé selon la revendication 1, **caractérisé en ce qu'**on introduit le courant gazeux quittant l'oligocarbonate, contenant le méthanol et le carbonate de diméthyle étant amené de nouveau à l'oligocarbonate en partie pour la saturation.

13. Procédé selon la revendication 1, **caractérisé en ce qu'**on envisage directement la quantité totale de CDM nécessaire, la somme de la quantité donnée par la stoechiométrie du produit souhaité avec la quantité de CDM, qui est séparée par distillation pendant la réalisation de la réaction.

14. Procédé selon la revendication 1, **caractérisé en ce qu'**on introduit au début de la réaction un excès mesuré de CDM et qu'après la séparation par distillation de l'azéotrope et après le coiffage il se forme un produit qui présente une fonctionnalité complète des groupes OH, cependant qui est à un degré de polymérisation trop élevé et ensuite par addition des quantités correspondantes des composants diols et par nouvelle transestérification forme la stoechiométrie définie de l'oligocarbonate diol.

15. Procédé selon la revendication 1, **caractérisé en ce qu'**on, utilise les diols aliphatiques avec 3 à 20 atomes de C dans la chaîne, ainsi que des mélanges de différents diols.

16. Procédé selon la revendication 1, **caractérisé en ce qu'**on utilise des produits d'addition de diols avec des lactones (esterdiols) comme par exemple la caprolactone, la valérolactone, etc., ainsi que des mélanges de diols avec des lactones.

17. Procédé selon la revendication 1, **caractérisé en ce qu'**on utilise des produits de condensation de diols avec des acides dicarboniques, comme par exemple : l'acide adipique, l'acide glutarique, l'acide succinique, l'acide malonique, etc., ou des esters d'acides dicarboniques ainsi que des mélanges de diols avec des acides dicarboniques ou des esters d'acides dicarboniques.

18. Procédé selon la revendication 1, **caractérisé en ce qu'**on utilise des polyétherpolyols comme par exemple le polyéthylèneglycol, le polypropylèneglycol, le polybutylèneglycol.

19. Procédé selon la revendication 1, **caractérisé en ce qu'**on utilise le 1,6-hexanediol, le 1,5-pentanediol et/ou des mélanges de 1,6-hexanediol et de caprolactone.

20. Procédé selon les revendications 16, 17 et 19, **caractérisé en ce qu'**on forme l'ester in situ sans transestérification induite à partir de matières premières pendant la préparation de l'oligocarbonate diol.

21. Procédé selon la revendication 1, **caractérisé en ce que** par la stoechiométrie du produit final à préparer le rapport molaire prévu du diol au CDM dans le produit est entre 1,01 et 2,0.

22. Procédé selon la revendication 1, **caractérisé en ce qu'**on utilise des catalyseurs solubles (catalyse homogène) pour la réaction de transestérification.

23. Procédé selon la revendication 22, **caractérisé en ce qu'**on utilise des catalyseurs solubles en des concentrations jusqu'à 1000 ppm (0,1 % en poids).

24. Procédé selon la revendication 1, **caractérisé en ce qu'**on utilise des catalyseurs de transestérification hétérogènes (catalyse hétérogène).
